# FASCICULE DE BREVET EUROPEEN

(11) **EP 1 373 010 B1**
(45) Date de publication et mention de la délivrance du brevet: **01.03.2006**
(21) Numéro de dépôt: 02759811.9
(22) Date de dépôt: 02.04.2002
(51) Int. Cl.: B60N 2/00, B60N 2/70, A47C 16/00

(54) **SIEGE, EN PARTICULIER POUR TRANSPORTS EN COMMUN**
SITZ, INSBESONDERE FÜR ÖFFENTLICHE VERKEHRSMITTEL
SEAT, IN PARTICULAR FOR PUBLIC TRANSPORT VEHICLES

(30) Priorité: 03.04.2001 FR 0104667
(43) Date de publication de la demande: 02.01.2004
(73) Titulaire: Compin, 27000 Evreux (FR)
(72) Inventeur: BERNARD, Didier, F-27180 Les Baux Sainte Croix (FR); GRARD, Bernard, F-27290 Freneuse sur Risle (FR); STACKLER, Christian, F-27240 Avrilly (FR)
(74) Mandataire: Ramey, Daniel
(86) Numéro de dépôt international: PCT/FR2002/001146
(87) Numéro de publication internationale: WO 2002/081258

(56) Documents cités:
- DE-A- 3 111 839
- FR-A- 1 539 717
- GB-A- 2 070 728
- NL-A- 8 300 928
- US-A- 2 845 111
- US-A- 4 045 080

## Description

La présente invention concerne un siège, en particulier pour transports en commun, suivant le préambule, généralement connu, de la revendication indépendante (cf. par exemple US-A-4 045 080).

Les sièges qui équipent des voitures de chemin de fer ou analogue, comprennent en général une assise et un dossier montés sur une structure de support, soit fixement, soit de façon réglable, les dossiers étant par exemple inclinables. Pour résister aux tentatives de destruction ou de détérioration, en particulier de lacération au moyen d'un instrument tranchant, ces sièges sont formés avec des assises et des dossiers en matériaux rigides et sont assez inconfortables, ou bien sont équipés de coussins ou d'autres moyens de rembourrage et sont plus confortables, mais doivent être protégés par des revêtements anti-lacération et anti-feu et sont donc plus coûteux.

L'invention a notamment pour but d'offrir un compromis entre ces deux solutions, qui permette de combiner leurs avantages tout en évitant leurs inconvénients.

Elle propose à cet effet un siège, en particulier pour transports en commun, comprenant une assise et un dossier comportant une plaque mobile d'appui dorsal, caractérisé en ce qu' une partie inférieure de ladite plaque est reliée à des moyens fixes de support et une partie supérieure de ladite plaque est déformable élastiquement par rapport à ladite partie inférieure.

Avantageusement, la partie supérieure de la plaque d'appui dorsal est déformable élastiquement en flexion et/ou en torsion par rapport à ladite partie inférieure.

Le dossier du siège selon l'invention est ainsi capable de suivre élastiquement les petits mouvements du dos de la personne assise sur le siège, de soutenir élastiquement le dos de la personne au niveau des épaules et de se conformer à la courbure du dos de la personne.

Il en résulte un confort très supérieur à celui que procure un siège à dossier rigide et fixe ou inclinable, pour un coût inférieur à celui d'un siège à dossier rembourré.

Dans une forme de réalisation de l'invention, la déformation élastique de la plaque d'appui dorsal est limitée par butée souple ou rigide sur un support fixe qui comprend un cadre périphérique entourant avec jeu deux côtés verticaux et un côté horizontal supérieur de la plaque d'appui dorsal, et une paroi de fond reliée au cadre et s'étendant le long de la plaque d'appui dorsal à distance de celle-ci.

Des moyens élastiques de rappel éventuellement réglables sont avantageusement montés entre la plaque d'appui dorsal et le support fixe.

Ainsi, le dossier du siège selon l'invention forme un ensemble monobloc dont la face avant est la plaque mobile d'appui dorsal et dont la face arrière est la paroi de fond du support fixe.

Selon une autre caractéristique de l'invention, la plaque d'appui dorsal comprend des zones d'affaiblissement définissant une ligne ou une bande transversale de déformation préférentielle en flexion et en torsion par rapport à sa partie inférieure.

Avantageusement, les zones d'affaiblissement sont constituées par des découpes, des fentes, des rainures ou des parties de moindre épaisseur et sont formées dans un rebord périphérique de la plaque d'appui dorsal.

De façon économique, la plaque d'appui dorsal est métallique ou en une matière plastique rigide ou semi-rigide, telle par exemple que du polypropylène renforcé de fibres.

Selon encore une autre caractéristique de l'invention, la partie inférieure de la plaque d'appui dorsal comprend, sensiblement à sa jonction avec la partie supérieure précitée, une surface d'appui lombaire élastiquement déformable, qui s'étend sensiblement dans le plan de la plaque d'appui dorsal sur la plus grande partie de la largeur de celle-ci.

Cette surface d'appui lombaire est supportée par des moyens de rappel élastiques qui sont logés dans un renfoncement de la plaque d'appui dorsal ou dans une boîte rapportée dans une ouverture de la plaque d'appui dorsal.

Cette surface d'appui lombaire est de préférence en une matière souple non lacérable.

De façon générale, l'invention s'applique aux sièges pour transports en commun, comme déjà indiqué, et également à d'autres types de sièges, en particulier ceux qui sont installés dans les lieux publics.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique de côté en coupe verticale d'un siège selon l'invention ;
- les figures 2, 3 et 4 sont des vues partielles, à plus grande échelle, de trois modes de réalisation des moyens déformables de la plaque d'appui dorsal du siège de la figure 1 ; et
- la figure 5 est une vue schématique de face de cette plaque d'appui dorsal.

Dans les dessins, la référence 10 désigne un siège selon l'invention, notamment un siège pour voiture de chemin de fer ou analogue, qui comprend une assise 12 et un dossier 14 montés fixement sur une structure de support non représentée comprenant par exemple des pieds de fixation au sol et des moyens de fixation à une paroi latérale.

L'assise 12 peut être souple et recouverte d'une matière non lacérable, ou est rigide et réalisée par exemple en métal ou en matière plastique avec un revêtement extérieur décoratif en tissu ou analogue. Le dossier 14 est formé d'une coque rigide 16 en métal ou en matière plastique comprenant une face arrière 18 et un cadre périphérique 20, et d'une plaque d'appui dorsal 22 qui forme la face avant du dossier 14 et qui est mobile par rapport à la coque 16.

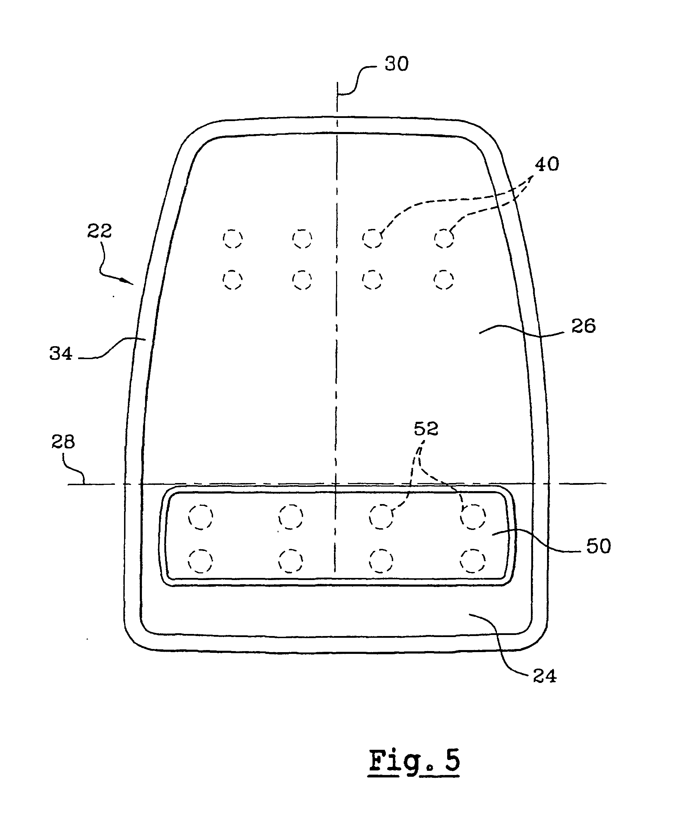

La plaque d'appui dorsal 22 dont une vue de face est représentée en figure 5, est réalisée en métal ou en matière plastique rigide et est fixée par sa partie inférieure 24 à la coque 16 et/ou à l'assise 12, sa partie supérieure 26 étant élastiquement déformable en flexion autour d'une ligne ou bande transversale 28 et en torsion et flexion approximativement autour d'un axe médian 30 perpendiculaire à l'axe 28, comme cela sera expliqué plus en détail dans ce qui suit.

La plaque d'appui dorsal 22 comporte un rebord périphérique 32 s'étendant au moins le long de ses deux côtés latéraux et de son côté horizontal supérieur, ce rebord 32 étant perpendiculaire à la face avant du dossier et s'étendant vers l'arrière, c'est-à-dire en direction de la face arrière 18 de la coque 16. Ce rebord périphérique 32 comprend lui-même un petit rebord 34 formé le long de son bord arrière et orienté vers l'extérieur. Ce rebord 34 coopère par butée avec un rebord 36 formé sur le rebord périphérique 20 de la coque 16 et s'étendant vers l'intérieur, pour définir une position avant ou de repos de la plaque d'appui dorsal 22.

Des moyens élastiques de rappel 40 tels par exemple que des ressorts, sont agencés entre la partie supérieure 26 de la plaque d'appui dorsal 22 et la partie supérieure de la paroi de fond 18 de la coque 16, et sollicitent constamment la plaque d'appui dorsal 22 vers sa position avant. De préférence, la force de rappel exercée sur la plaque 22 est réglable.

La ligne ou bande transversale 28 précitée est formée par des zones d'affaiblissement de la plaque d'appui dorsal 22, en particulier des parties latérales de son rebord périphérique 32.

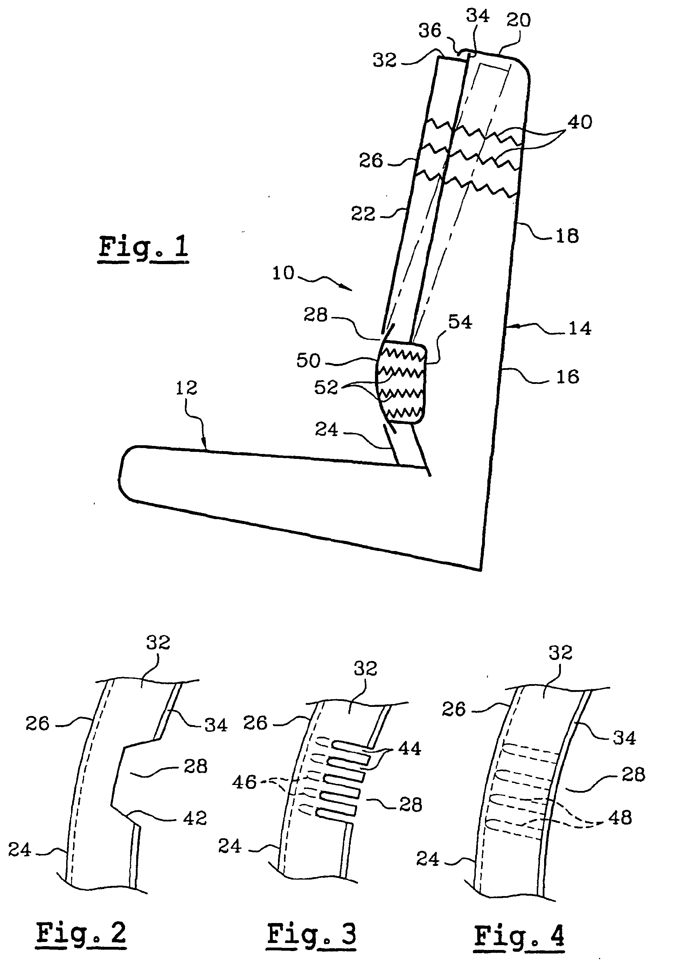

Dans le mode de réalisation de la figure 2, chaque zone d'affaiblissement est formée par une découpe 42 d'une partie latérale du rebord 32, cette découpe s'étendant depuis le rebord arrière 34 sur une partie de la largeur du rebord 32 et pouvant avoir une forme trapézoïdale comme représentée.

Dans le mode de réalisation de la figure 3, chaque zone d'affaiblissement définissant la bande transversale 28 est formée par une série de fentes 44 découpées dans une partie latérale du rebord périphérique 32, depuis son rebord arrière 34 sur une partie de sa largeur. Eventuellement, ces fentes 44 sont prolongées en direction de la face avant de la plaque d'appui dorsal par des rainures 46 dont la profondeur diminue progressivement jusqu'à s'annuler.

Dans le mode de réalisation de la figure 4, chaque zone d'affaiblissement du rebord périphérique 32 définissant la bande transversale 28 est formée d'une série de rainures 48 qui s'étendent sur toute la largeur du rebord périphérique 32.

Des moyens d'appui lombaire sont également prévus dans la plaque d'appui dorsal, sensiblement au niveau de la bande 28 précitée ou immédiatement au-dessous de cette bande, et comprennent une surface d'appui 50 ayant une forme extérieure convexe, qui s'étend sensiblement dans le plan de la face avant de la plaque d'appui dorsal 22 et qui est sollicitée vers l'avant en permanence par des moyens élastiques 52 tels que des ressorts, de la mousse, etc., prenant appui sur une paroi de fond 54 qui se trouve en avant de la paroi de fond 18 de la coque 16.

La paroi de fond 54 peut être formée d'une pièce avec la plaque d'appui dorsal 22 ou être constituée d'une boîte rapportée dans une ouverture rectangulaire de la plaque d'appui dorsal 22.

La surface d'appui 50 est une surface souple, d'un type non lacérable connu de l'homme du métier et comprenant par exemple un tricot à mailles métalliques recouvert d'une nappe textile.

Comme l'assise 12, la coque 16 et la plaque d'appui dorsal 22 peuvent comporter un revêtement extérieur décoratif tel qu'un tissu ou analogue, par exemple collé.

Lorsqu'une personne s'assoit sur le siège 10, au fond de celui-ci, les moyens 50, 52 d'appui lombaire soutiennent élastiquement la partie correspondante de son dos et s'adaptent à sa forme et à sa position, tandis que la partie supérieure 26 de la plaque d'appui dorsal 22 peut basculer légèrement vers l'arrière par flexion autour de la ligne ou bande transversale précitée 28, en comprimant les ressorts 40. Si la personne pivote légèrement sur son siège d'un côté ou de l'autre ou s'assoit légèrement en biais sur le siège, une de ses épaules va s'appuyer davantage sur un bord correspondant de la plaque d'appui dorsal qui va s'enfoncer vers l'intérieur de la coque 16, cette déformation de la plaque d'appui dorsal 22 étant comparable à une torsion d'un côté de cette plaque autour de l'axe 30 représenté en figure 5. Le jeu entre le rebord 32 de la plaque d'appui dorsal et le rebord 36 du cadre 20 est faible, pour empêcher le passage de salissures ou d'objets divers.

Si la personne se penche ou se déplace légèrement vers l'avant, les ressorts 40 ramènent la plaque d'appui dorsal dans la position représentée en trait plein en figure 1, qui est définie par butée du petit rebord extérieur 34 de la plaque 22 sur le petit rebord intérieur 36 de la coque 16.

Avantageusement, les butées de la plaque 22 sur les parties de la coque 16 qui définissent ses fins de course peuvent être souples ou progressives.

On comprend que, quand une personne est assise sur le siège 10 et appuyée sur la plaque 22, celle-ci se déplace vers l'arrière et pivote vers la gauche et vers la droite en restant parallèle au dos de la personne et en suivant ses petits mouvements. L'importance du soutien élastique du dos de la personne est déterminée par la raideur des ressorts 40 et par le type des zones d'affaiblissement qui sont formées dans les parties latérales du rebord périphérique 32 de la plaque 22 et qui offrent une résistance plus ou moins grande à la flexion de cette plaque autour de la ligne ou de la bande 28.

On notera que, dans le siège selon l'invention, les moyens d'appui lombaires s'adaptent automatiquement à la morphologie de la personne sans modifier l'appui dorsal procuré par la plaque 22. En outre, la flexibilité de cette plaque d'appui dorsal permet à la personne de changer sa position sans modifier sensiblement les pressions exercées dans les zones d'appui de son dos sur la plaque 22.

## Revendications

1. Siège, en particulier pour transports en commun, comprenant une assise (12) et un dossier (14) comportant (14) une plaque mobile (22) d'appui dorsal **caractérisé en ce qu'** une partie inférieure (24) de ladite plaque (22), est reliée à des moyens fixes de support et une partie supérieure (26) de ladite plaque (22) est déformable élastiquement par rapport à ladite partie inférieure (24).

2. Siège selon la revendication 1, **caractérisé en ce que** la partie supérieure (26) de la plaque d'appui dorsal (22) est élastiquement déformable en flexion et/ou en torsion par rapport à ladite partie inférieure (24).

3. Siège selon la revendication 1 ou 2, **caractérisé en ce que** la déformation élastique de la plaque d'appui dorsal (22) est limitée par butée souple ou rigide.

4. Siège selon la revendication 3, **caractérisé en ce que** le support fixe (16) comprend un cadre périphérique (20) entourant avec jeu deux côtés verticaux et un côté horizontal supérieur de la plaque d'appui dorsal (22), et une paroi de fond (18) reliée au cadre (20) et s'étendant le long de la plaque d'appui dorsal (22) à distance de celle-ci.

5. Siège selon la revendication 3 ou 4, **caractérisé en ce que** des moyens (40) de rappel élastiques sont agencés entre la plaque d'appui dorsal (22) et le support fixe (16).

6. Siège selon l'une des revendications précédentes, **caractérisé en ce que** la plaque d'appui dorsal (22) comporte des zones d'affaiblissement (42, 44, 48) définissant une ligne ou une bande transversale (28) de déformation élastique préférentielle.

7. Siège selon la revendication 6, **caractérisé en ce que** les zones d'affaiblissement sont constituées par des découpes (42), des fentes (44), des rainures (46, 48) ou des parties de moindre épaisseur.

8. Siège selon la revendication 6 ou 7, **caractérisé en ce que** les zones d'affaiblissement sont formées dans les parties latérales d'un rebord périphérique de la plaque d'appui dorsal (22).

9. Siège selon l'une des revendications précédentes, **caractérisé en ce que** la plaque d'appui dorsal (22) est en matière plastique rigide ou semi-rigide ou en métal.

10. Siège selon l'une des revendications précédentes, **caractérisé en ce que** la partie inférieure (24) de la plaque d'appui dorsal (22) comprend, sensiblement à sa jonction avec la partie supérieure (26) précitée, une surface élastiquement déformable d'appui lombaire qui s'étend sensiblement dans le plan de la plaque d'appui dorsal sur une majeure partie de la largeur de celle-ci.

11. Siège selon la revendication 10, **caractérisé en ce que** la surface (50) d'appui lombaire est supportée par des moyens de rappel élastiques (52) logés dans un renfoncement (54) de la plaque d'appui dorsal (22) ou dans une boîte rapportée dans une ouverture de la plaque d'appui dorsal.

12. Siège selon la revendication 10 ou 11, **caractérisé en ce que** la surface (50) d'appui lombaire est en matière souple non lacérable.

13. Siège selon l'une des revendications précédentes, **caractérisé en ce que** la plaque d'appui dorsal (22) et d'autres parties rigides du siège comportent un revêtement extérieur décoratif, par exemple collé.

## Claims

1. A chair, in particular for mass transport, comprising a seat (12) and a back (14) including a movable dorsal support plate (22), **characterized in that** a lower portion (24) of said plate (22) is connected to fixed support means and an upper portion (26) of said plate (22) is elastically deformable with respect to said lower portion (24).

2. A chair according to claim 1, **characterized in that** the upper portion (26) of the dorsal support plate (22) is elastically deformable by bending and/or by torsion with respect to said lower portion (24).

3. A chair according to claim 1 or claim 2, **characterized in that** the elastic deformation of the dorsal support plate (22) is limited by a flexible or rigid abutment.

4. A chair according to claim 3, **characterized in that** the fixed support (16) comprises a peripheral frame (20) surrounding, with clearance, two vertical sides and an upper horizontal side of the dorsal support plate (22), and a bottom wall (18) connected to the frame (20) and extending along the dorsal support plate (22) at a distance therefrom.

5. A chair according to claim 3 or claim 4, **characterized in that** resilient means (40) are arranged between the dorsal support plate (22) and the fixed support (16).

6. A chair according to one of the preceding claims, **characterized in that** the dorsal support plate (22) comprises weakened zones (42, 44, 48) defining a transverse line or band (28) of preferential elastic deformation.

7. A chair according to claim 6, **characterized in that** the weakened zones are constituted by cutouts (42), slots (44), grooves (46, 48) or portions of decreased thickness.

8. A chair according to claim 6 or claim 7, **characterized in that** the weakened zones are formed in the lateral portions of a peripheral rim of the dorsal support plate (22).

9. A chair according to one of the preceding claims, **characterized in that** the dorsal support plate (22) is formed from rigid or semi-rigid plastics material or from metal.

10. A chair according to one of the preceding claims, **characterized in that** the lower portion (24) of the dorsal support plate (22) comprises, substantially at its junction with said upper portion (26), an elastically deformable lumbar support surface which extends substantially in the plane of the dorsal support plate over the majority of the width thereof.

11. A chair according to claim 10, **characterized in that** the lumbar support surface (50) is supported by resilient means (52) housed in a recess (54) in the dorsal support plate (22) or in a casing inserted in an opening in the dorsal support plate.

12. A chair according to claim 10 or claim 11, **characterized in that** the lumbar support surface (50) is formed from flexible laceration-proof material.

13. A chair according to one of the preceding claims, **characterized in that** the dorsal support plate (22) and other rigid portions of the chair comprise a decorative outer cover which is bonded, for example.

## Patentansprüche

1. Sitz, insbesondere für öffentliche Verkehrsmittel umfassend eine Sitzfläche (12) und eine Lehne (14), die eine bewegliche Platte (22) als Rückenlehne aufweist, **dadurch gekennzeichnet, dass** ein unterer Teil (24) der Platte (22) mit festen Trägermitteln verbunden ist und ein oberer Teil (26) der Platte (22) in Bezug auf den unteren Teil (24) elastisch verformbar ist.

2. Sitz nach Anspruch 1, **dadurch gekennzeichnet, dass** der obere Teil (26) der Rückenlehnenplatte (22) durch Biegen und/oder Drehen in Bezug auf den unteren Teil (24) elastisch verformbar ist.

3. Sitz nach Anspruch 1 oder 2, **dadurch gekennzeichnet, dass** die elastische Verformung der Rückenlehnenplatte (22) durch nachgiebigen oder starren Anschlag begrenzt ist.

4. Sitz nach Anspruch 3, **dadurch gekennzeichnet, dass** der feste Träger (16) einen Umfassungsrahmen (20) aufweist, der mit Spiel zwei vertikale Seiten und eine obere horizontale Seite der Rückenlehnenplatte (22) umgibt, und eine Grundplatte (18), die mit dem Rahmen (20) verbunden ist und sich entlang der Rückenlehnenplatte (22) in einem Abstand zu dieser erstreckt.

5. Sitz nach Anspruch 3 oder 4, **dadurch gekennzeichnet, dass** elastische Rückstellmittel (40) zwischen der Rückenlehnenplatte (22) und dem festen Träger (16) angeordnet sind.

6. Sitz nach einem der vorhergehenden Ansprüche, **dadurch gekennzeichnet, dass** die Rückenlehnenplatte (22) Dämpfungszonen (42, 44, 48) umfasst, die eine quergerichtete Linie oder einen Streifen (28) bevorzugter elastischer Verformung definieren.

7. Sitz nach Anspruch 6, **dadurch gekennzeichnet, dass** die Dämpfungszonen durch Ausschnitte (42), Schlitze (44), Rillen (46, 48) oder schmalere Teile gebildet sind.

8. Sitz nach Anspruch 6 oder 7, **dadurch gekennzeichnet, dass** die Dämpfungszonen in den Seitenteilen einer Umfangskante der Rückenlehnenplatte (22) ausgebildet sind.

9. Sitz nach einem der vorhergehenden Ansprüche, **dadurch gekennzeichnet, dass** die Rückenlehnenplatte (22) aus starrem oder halbstarrem Kunststoffmaterial oder aus Metall ist.

10. Sitz nach einem der vorhergehenden Ansprüche, **dadurch gekennzeichnet, dass** der untere Teil (24) der Rückenlehnenplatte (22) im Wesentlichen an seiner Verbindung mit dem zuvor genannten oberen Teil (26) eine elastisch verformbare Lendenstützfläche umfasst, die sich im Wesentlichen in der Ebene der Rückenlehnenplatte über den größten Teil ihrer Breite erstreckt.

11. Sitz nach Anspruch 10, **dadurch gekennzeichnet, dass** die Lendenstützfläche (50) durch elastische Rückstellmittel (52) getragen ist, die in einer Vertiefung (54) der Rückenlehnenplatte (22) oder in einem in einer Öffnung der Rückenlehnenplatte untergebrachten Gehäuse gelegen sind.

12. Sitz nach Anspruch 10 oder 11, **dadurch gekennzeichnet, dass** die Lendenstützfläche (50) aus nachgiebigem nicht zerreißbarem Material ist.

13. Sitz nach einem der vorhergehenden Ansprüche, **dadurch gekennzeichnet, dass** die Rückenlehnenplatte (22) und andere starre Teile des Sitzes einen dekorativen Überzug aufweisen, der zum Beispiel geklebt ist.
